# EUROPÄISCHE PATENTANMELDUNG

(11) **EP 2 198 980 A1**
(43) Veröffentlichungstag der Anmeldung: **23.06.2010**
(21) Anmeldenummer: 09014023.7
(22) Anmeldetag: 09.11.2009
(51) Int. Cl.: B05D 3/02, B05D 3/06, B29C 71/04, C08J 3/28

(54) **Polymeroberflächen mit hoher Netzwerkdichte und betreffend zur Herstellung derselben**

(30) Priorität: 09.12.2008 DE 102008060906
(71) Anmelder: Innovative Oberflächentechnologie GmbH, 04318 Leipzig (DE)
(72) Erfinder: Riedel, Carsten, Dr., 04416 Markkleeberg (DE); Mehnert, Reiner, Prof. Dr., 04416 Markkleeberg (DE); Bauer, Frank, Dr., 04318 Leipzig (DE); Schubert, Rolf, Dr., 04688 Trebsen (DE)
(74) Vertreter: Köhler, Tobias

(57) **Zusammenfassung**

Die Erfindung betrifft Polymeroberflächen mit hoher Netzwerkdichte und ein Verfahren zur Herstellung solcher Oberflächen zur Verbesserung von Eigenschaften wie Oberflächenhärte, Chemikalienresistenz und Bewitterungsbeständigkeit, wobei Polymeroberflächen mit Photonen bestrahlt werden, welche Energien von 4 bis 10 eV aufweisen und somit eine erhöhte Netzwerkdichte, ein erhöhtes Molekulargewicht und verringerte freie Volumina realisieren.

## Beschreibung

Die Erfindung betrifft Polymeroberflächen mit hoher Netzwerkdichte und ein Verfahren zur Herstellung solcher Oberflächen zur Verbesserung von Eigenschaften wie Oberflächenhärte, Chemikalienresistenz und Bewitterungsbeständigkeit.

Die Oberflächenvernetzung von flüssigen Acrylat- und Methacrylat-Formulierungen durch 172 nm Photonen ist bekannt und wird z. B. in den Patentschriften DE 296 06 258 U1; DE 44 39 350 C2 ; EP 07 06 834 A15; DE102006042063A1; DE10.2005060198A1, DE000019846659C2, EP000001119589B1, US000006663952B1 beschrieben.

Die beabsichtigte Oberflächenvernetzung erzeugt eine Mikrofaltung, die z.B. für die Mattierung von Oberflächen genutzt wird.
Für diese Anwendungen wird die Mikrofaltung auf der Oberfläche einer noch flüssigen strahlenhärtbaren Schicht durch den bei der Vernetzung einsetzenden Schrumpf erzeugt.
Die Durchhärtung erfolgt im Allgemeinen unmittelbar nach der Mikrofaltung durch Bestrahlung mit hochenergetischen Elektronen oder durch UV-Strahlung mit hoher Eindringtiefe. Dadurch erreicht man die Bildung einer mikrostrukturierten, mechanisch stabilen Schicht.

Nachteilig ist hierbei, dass es mit den bekannten Verfahren nicht möglich ist, die Mikrofaltung an der Oberfläche zu vermeiden und trotzdem die hohe Vernetzungsdichte an der Oberfläche zu nutzen. Gerade diese Oberflächenfaltung ist für viele Anwendungen nicht erwünscht.

Gefordert wird hier eine Erhöhung der Vernetzungsdichte, ohne dass die Oberflächenstruktur und damit z.B. der Glanz der Oberfläche geändert werden.

Aufgabe der vorliegenden Erfindung ist es daher, ein Verfahren zu entwickeln, dass die Erzeugung hoher Netzwerkdichten an der Oberfläche von Polymeren ermöglicht, ohne dass die Topologie der Oberfläche verändert wird.

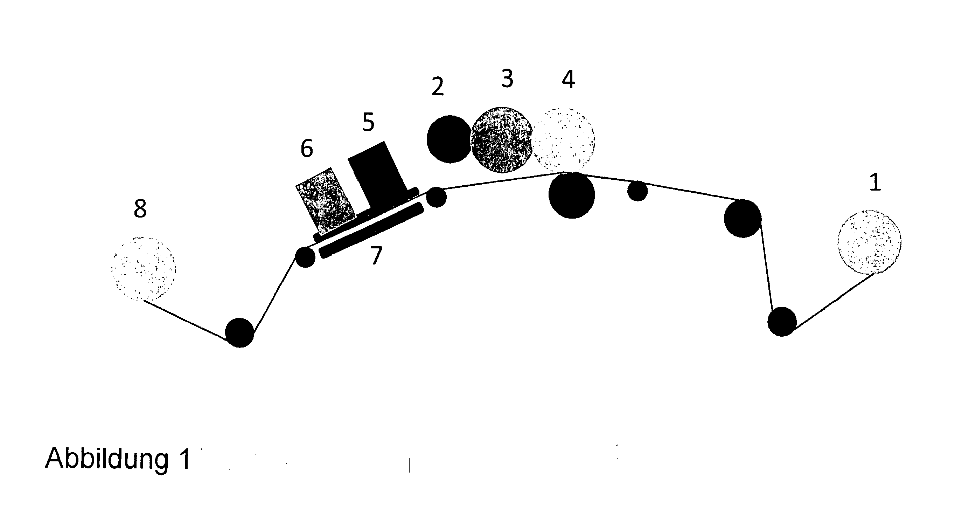

Diese Aufgabe wird die erfindungsgemäße Lösung gemäß den Patentansprüchen 1, bis 9 gelöst und soll nachfolgend anhand von Ausführungsbeispielen und der Abbildung 1 näher erläutert werden.

Erfindungsgemäß werden Polymeroberfilächen mit Photonen bestrahlt, die Energien von 4 bis 11 eV aufweisen.
Diese hochenergetischen Photonen werden in der Polymermatrix stark absorbiert. Sie erreichen im Polymeren Eindringtiefen von wenigen 10 bis einigen hundert Nanometer. Durch elektronische Anregung von Molekülzuständen im Polymermolekül und bei Photonenenergien größer 8,5 eV auch durch Ionisation, werden strahleninitiierte Primärprozesse ausgelöst, die zur Erzeugung von Polymerradikalen führen.
Polymerradikale können durch Rekombination zur Vernetzung, d.h, zu einer Erhöhung des Molekulargewichtes und zur Verringerung der freien Volumina im Polymeren führen.

Als Photonenquellen werden vorteilhafterweise Excimerstrahler verwendet, die technisch als Linien- oder Flächenquellen so ausgebildet sind, dass ausreichende Photonenflüsse über Längen von bis zu 2,3 m erzeugt werden können. Flächenquellen erhält man durch Zusammenschalten mehrerer Linienquellen.

Als Photonenquellen stehen z.B. folgende Excimerstrahler zur Verfügung:

**Tabelle 1 Einige technisch verfügbare Excimer-Photonenquellen**

| Excimer | Emissionswellenlänge (nm) | Photonenenergie (eV) | Typische Eindringtiefe der Photonen im Acrylat-Polymeren (nm) |
|---|---|---|---|
| KrCl | 222 | 5,59 | 1500 |
| Xe₂ | 172 | 7,22 | 100 |
| Ar₂ | 126 | 9,85 | 20 |

Das physikalische Wirkprinzip, der Aufbau und die Anwendungen von Excimerstrahlern werden z.B. in
1. B. Eliasson, U. Kogelschatz: Appl. Phys. B 46 , p. 299 (1988)
2. U. Kogelschatz: Pure & Appl.Chem. Vol 62, p. 1667 (1990)
3.U. Kogelschatz: Proceedings Thenth Int. Conf. Gas Discharges and Their Applications, Vol.II, p. 972 (1992)
4. R.Mehnert, I.Janovsky, A.Pincus: UV & EB Curing Technology and Equipment, Wiley-SITA, London 1998
beschrieben.

Polymere, deren Netzwerkdichte an der Oberfläche durch Bestrahlung mit hochenergetischen Photonen erhöht werden kann, sind vor allem strahlen- oder auch thermisch vernetzte Acrylate, Methacrylate aber auch strahlenvernetzbare Polyethylene.

Erfindungsgemäß wird deshalb die Oberflächen-Nachvernetzung im polymeren Festkörper durch hochenergetische Photonen ausgelöst. Überraschend wurde gefunden, dass diese Vernetzungsreaktionen im Oberflächenbereich des Festkörpers, d.h. im Bereich der Eindringtiefe der Photonen, mit ähnlicher Effizienz ablaufen, wie das bisher für die Vernetzung flüssiger Monomer/Oligomer-Formulierungen beobachtet wurde.
Beim erfindungsgemäßen Verfahren wird die Polymeroberfläche in einer Bestrahlungskammer unter Ausschluss von Sauerstoff, z.B. durch Spülen der Kammer mit Stickstoff, mit hochenergetischen Photonen von geeigneten Excimerquellen bestrahlt.
Die Bestrahlungszeiten können dabei 0,01 bis 300 s, vorzugsweise 0,05 bis 50 s, besonders vorzugsweise 0,1 bis 5 s betragen.
Die Erfindung bezieht sich im Allgemeinen auf alle festen polymeren Matrizen wie Homo- und Copolymere, Polymerlegierungen, heterogenen Mischungen von Polymeren mit mikro- und nanoskaligen Füllstoffen sowie Pigmenten.
Die Polymere können gänzlich oder in Teilen aus Polymeren von Acrylat-, Methacrylat- und Vinylverbindungen, Polyolefinen, Phenol-, Melamin- oder Epoxydharzen bestehen.

### Beispiel 1

### Hergestellt wird eine strahlenhärtbare Acrylat-Nanokomposit-Beschichtung nach folgender Vorschrift:

Die Nanopartikel-Modifizierung erfolgt im flüssigen Acrylat ohne Wasser durch Anbindung von multifunktionellen Acrylaten an das Silica-Partikel nach EP 1 153 090 B1:
88.72 g Ebecryl 800, 133.08 g SR 259 (TTEGDA) und 0.548 g 4-Hydroxyanisol vorlegen, 2.44 g DYNASYLAN 40, 4.875 g DYNASYLAN AMEO und 0.75 g H₂O dosieren, portionsweise 88 g AEROSIL OX 50 zugeben, unter intensivem Rühren auf 70°C erwärmen und 3h rühren.

Nach dem Abkühlen 5 g Photoinitiator DC 1173 und 2 g des Hydrophobierungsadditivs Tegorad 2100 zugeben.
Diese Formulierung wird mit einem Labor-Rollcoater auf bedruckte Finishfolie aufgetragen. Die Schichtdicke beträgt 12 g/m². Die UV-Härtung erfolgt auf einer Bandanlage nach folgenden Bestrahlungsregimes:
Regime a)
   Bestrahlung der Beschichtung mit einer Mitteldruck-Quecksilber-Lampe einer elektrischen Leistung von 120 W/cm, Bestrahlungsdosis 730 mJ/cm².
   Regime a entspricht dem Stand der Technik der UV-Härtung von strahlenhärtbaren Formulierungen.
Regime b)
   Erster Schritt: Bestrahlung der Beschichtung mit einer Mitteldruck-Quecksilber-Lampe (Hg-UV) einer elektrischen Leistung von 120 W/cm, Bestrahlungsdosis 730 mJ/cm². Zweiter Schritt: Nachbestrahlung mit einer 172 nm Excimerlampe, Bestrahlungsdosis 5 mJ/cm².
   Regime b entspricht der erfindungsgemäßen Lösung.
Regime c)
   Erster Schritt: Bestrahlung der Beschichtung mit einer 172 nm Excimerlampe, Bestrahlungsdosis 5 mJ/cm². Zweiter Schritt: Durchhärtung der Beschichtung mit einer Mitteldruck-Quecksilber-Lampe einer elektrischen Leistung von 120 W/cm, Bestrahlungsdosis 730 mJ/cm².
   Regime c entspricht dem Stand der Technik der Mikrostrukturierung bzw. Mattierung von strahlenhärtbaren Formulierungen mit 172 nm Excimerstrahlern.
Regime b entspricht der erfindungsgemäßen Bestrahlungsmethode, während die Bestrahlungsverfahren nach Regime a und c zum Vergleich herangezogen werden.

Eine Zusammenstellung von Messwerten zu Oberflächeneigenschaften der nach Regime a bis c hergestellten Beschichtungen enthält Tabelle 2

**Tabelle 2 Oberflächeneigenschaften von Acrylat-Nanokomposit-Beschichtungen, die nach Regime a, b bzw. c hergestellt wurden.**

| Eigenschaft | Härtung nach Regime a: nur Hg-UV-Bestrahlung | Härtung nach Regime b: 1. Schritt: Hg-UV-Bestrahlung 2.Schritt: Bestrahlung mit 172 nm Excimerstrahler | Härtung nach Regime c: 1. Schritt: 3estrahlung mit 172 nm Excimerstrahler 2.Schritt: Hg-UV-Bestrahlung |
|---|---|---|---|
| | Stand der Technik | erfindungsgemäße Lösung | Stand der Technik |
| Mikrohärte(N/mm²) | 227 | 249 | 264 |
| Glanz (at 60°) | 58 | 59 | 6 |
| Oberflächenenergie (mN/m) | 21 | 23 | 29 |
| Wasser-Kontaktwinkel (°) | 100 | 95 | 90 |
| Chem.Beständigkeit ( 2% Jod in Ethanol, 2h Einwirkzeit) | befriedigend | gut | sehr gut |

### Ergebnisse bzgl. Beispiel 1

- Nachbestrahlung einer bereits strahlengehärteten Beschichtung mit 172 nm Photonen erhöht die Mikrohärte (vergleiche Regime a und b in Tabelle 2).
- Nachbestrahlung einer bereits strahlengehärteten Beschichtung mit 172 nm Photonen erhöht die Chemikalienbeständigkeit (vergleiche Jodtest für Regime a und b).
- Die Erhöhung der Chemikalienbeständigkeit ist ein Indikator für eine ebenfalls verbesserte Bewitterungsbeständigkeit durch Nachbestrahlung mit 172 nm Photonen.
- Nachbestrahlung einer bereits strahlengehärteten Beschichtung mit 172 nm Photonen erhöht die Oberflächenenergie (vergleiche Regime a und b).
- Nachbestrahlung einer bereits strahlengehärteten Beschichtung mit 172 nm Photonen verändert den Glanz nicht (vergleiche Glanzwerte für Regime a, b und c)
- Nachbestrahlung einer bereits strahlengehärteten Beschichtung mit 172 nm Photonen führt zu Netzwerkdichten, die geringer sind als bei vorheriger 172 nm-Bestrahlung flüssiger Acrylat-Nanokomposite (vergleiche Regime b und c), jedoch höher als ohne Nachbestrahlung (vergleiche Regime a und b).

### Beispiel 2

Eine strahlenhärtbare Acrylatformulierung bestehend aus 800 g Polyesteracrylat EB 830 ( Cytec ), 3600 g ethoxyliertem Trimethoxypropytriacrylat (TMPEOTA) Sartomer 454 ( Cray Valley) und 160 g Photoinitiator DC 1173 ( Ciba ) wird mit einer Beschichtungsmaschine, die schematisch in Abbildung 1 dargestellt ist, auf Papier aufgetragen.
Die Bahngeschwindigkeit beträgt 30 m/min.
Das Papiersubstrat gelangt über die Abwicklung 1 zum Auftragwerk bestehend aus den Walzen 2,3 und 4 in die mit Stickstoff gespülte Bestrahlungskammer 7.
Der Beschichtungsstoff wird in den Spalt zwischen Dosierwalze 2 und Übertragwalze 3 eingebracht und mittels der Auftragwalze 4 mit einem Auftraggewicht von 15 g/m² auf das Papiersubstrat übertragen.
Die Restsauerstoff-Konzentration beträgt hier < 200 ppm.

Wird in Position 5 eine Quecksilber-UV-Lampe zur Aushärtung der Beschichtung verwendet und Position 6 bleibt unbesetzt, dann erhält man ein gehärtetes Produkt nach Regime a der Tabelle 2. Das Produkt wird an der Aufwicklung 8 aufgerollt.

Wird in Position 5 eine 172 nm-Excimer-Lampe zur Oberflächenhärtung der Beschichtung verwendet und in Position 6 eine Quecksilber-UV-Lampe eingesetzt, dann erhält man eine dem Stand der Technik entsprechende physikalisch mattierte Beschichtung nach Regime c der Tabelle 2.

Wird in Position 5 eine Quecksilber-UV-Lampe zur Aushärtung der Beschichtung verwendet und in Position 6 eine 172 nm Excimerlampe zur Nachhärtung verwendet, dann erhält man das erfindungsgemäße Produkt nach Regime b in Tabelle 2.

## Patentansprüche

**1.**
Chemikalienbeständige Polymeroberfläche, **dadurch gekennzeichnet, dass** sie eine erhöhte Netzwerkdichte, ein erhöhtes Molekulargewicht und verringerte freie Volumina aufweist.

**2.**
Chemikalienbeständige Polymeroberfläche nach Anspruch 1, **dadurch gekennzeichnet, dass** sie ohne Veränderung der Oberflächenstruktur eine Erhöhung der Vernetzungsdichte aufweist.

**3.**
Chemikalienbeständige Polymeroberfläche nach Anspruch 1, **dadurch gekennzeichnet, dass** sie ohne Veränderung der Oberflächenstruktur eine Erhöhung der Oberflächenhärte aufweist.

**4.**
Verfahren zur Herstellung von Polymeroberflächen mit hoher Netzwerkdichte zur Verbesserung von Eigenschaften wie Oberflächenhärte, Chemikalienresistenz und Bewitterungsbeständigkeit, **dadurch gekennzeichnet, dass** Polymeroberflächen mit Photonen bestrahlt werden, welche Energien von 4 bis 10 eV aufweisen.

**5.**
Verfahren nach Anspruch 4, **dadurch gekennzeichnet, dass** Polymeroberflächen mit Quecksilber-UV-Lampen zur Aushärtung und 172 nm Excimerlampen zur Nachhärtung der Polymeroberflächen bestrahlt werden.

**6.**
Verfahren nach Anspruch 4, **dadurch gekennzeichnet, dass** die Bestrahlung der Polymeroberflächen mit hochenergetischen Photonen unter Inertgas wie Stickstoff, Argon oder Helium erfolgt.

**7.**
Verfahren nach Anspruch 4, **dadurch gekennzeichnet, dass** die Bestrahlung mit hochenergetischen Photonen bei Bestrahlungszeiten von 0,01 bis 300 s, vorzugsweise 0,05 bis 50 s, besonders vorzugsweise 0,1 bis 5 s erfolgt.

**8.**
Verfahren nach einem der Ansprüche 4 bis 7, **dadurch gekennzeichnet, dass** als polymere Substrate Acrylat-, Methacrylat- und Vinylverbindungen, Polyolefine, Phenol-, Melamin- oder Epoxydharze verwendet werden.

**9.**
Verwendung eines Verfahrens zur Herstellung von Polymeroberflächen durch eine Quecksilber-UV-Lampe zur Aushärtung und eine 172 nm Excimerlampe zur Nachhärtung der Polymeroberflächen zur Verbesserung von Eigenschaften der Polymeroberflächen wie Oberflächenhärte, Chemikalienresistenz und Bewitterungsbeständigkeit.
